# EUROPEAN PATENT SPECIFICATION

(11) **EP 4 636 293 B1**
(45) Date of publication and mention of the grant of the patent: **11.02.2026**
(21) Application number: 25169771.0
(22) Date of filing: 10.04.2025
(51) Int. Cl.: F16L 21/02, F16L 21/06, F16L 55/172

(54) **PIPE CLAMP ASSEMBLY FOR COUPLING PIPES WITH DIFFERENT DIAMETERS**
ROHRSCHELLE ZUR VERBINDUNG VON ROHREN MIT VERSCHIEDENEN DURCHMESSERN
ENSEMBLE COLLIER DE SERRAGE POUR TUYAUX DE RACCORDEMENT DE TUYAUX DE DIAMÈTRES DIFFÉRENTS

(30) Priority: 16.04.2024 US 202418636525
(43) Date of publication of application: 22.10.2025
(73) Proprietor: Krausz Industries Ltd., 4850001 Rosh HaAyin (IL)
(72) Inventor: Zeiman, Avishay, 7665407 Rehovot (IL); Ryvzh, Sergey, 7558305 Rishon LeZion (IL)
(74) Representative: Becker Kurig & Partner Patentanwälte mbB

(56) References cited:
- CN-A- 108 278 415
- CN-U- 212 900 232
- US-A1- 2012 299 293

## Description

### FIELD OF THE INVENTION

The present invention relates generally to pipe couplings and clamp assemblies, and particularly to a clamp assembly for coupling pipes with different diameters.

### BACKGROUND OF THE INVENTION

Many kinds of removable pipe couplings and clamp assemblies for pipes exist in the art. It is noted that throughout the specification and claims, the term "pipe" encompasses any kind of generally cylindrical object, and the terms "coupling" and "clamp" are used interchangeably.

Such couplings have an elastomeric seal assembly which is tightened to form a watertight seal against the pipe. Generally for coupling two pipes in line with each other, there are two elastomeric seal assemblies, such as annular rings, which are axially spaced from one another; one annular ring for each pipe. The annular ring is placed around the outer circumference of each pipe and sealed so as to apply radially-inward forces on the outside of the pipe. These radially-inward forces work against hydraulic forces which are directed radially outwards against the annular ring. The radially-inward forces thus prevent liquid leaking past the seal.

If the two pipes being coupled in line with each other have different diameters, special couplings must be used. For example, nested layers of seals may be used, so that one of the seal layers may be removed to accommodate a larger diameter pipe. However, in many applications the radial forces provided by the seals are not sufficient because the pipe coupling is also subject to axial hydraulic forces that can loosen the grip of the seals. Solutions are known for increasing the grip of the pipe coupling in the axial direction, but the known solutions cannot accommodate pipe couplings that couple pipes of different diameters.

US 2012/299293 A1 discloses a clamp assembly that has two adjacent annular clamps and the user has the choice of tightening just one of them or both of them. CN 108 278 415 A discloses an adjustable internal adapter sleeve, including a sleeve body with external threads, wherein a notch is formed along the edge of the upper end port on the sleeve body, with a membrane guide groove formed in the port wall on both sides of the notch. A portion of a rubber membrane sleeve is engaged within the guide groove, while another portion of the rubber membrane sleeve is fitted over the inner wall of the sleeve body. A support ring is positioned between the inner wall of the sleeve body and the rubber membrane sleeve, near the port on the inner side of the sleeve body. Support plates extending from both ends of the support ring protrude from one side of the sleeve body, with an adjustment nut located between the two support plates.

CN 212 900 232 U discloses a bellows splicing equipment with sleeve and two bellows bodies. The sleeve is movably fitted over the outer sides of the two bellows bodies, with a sealing ring fixedly installed inside the sleeve. Both ends of the two bellows bodies are positioned close to each other and are in movable sealing contact with the sealing ring. Connection plates are fixedly installed at both the top and bottom of the two bellows bodies. Connection slots are formed at both the top and bottom sides of the sleeve. The four connection plates are respectively movably connected to the corresponding connection slots. Vertical slots are formed at both the top and bottom of the sleeve.

### SUMMARY OF THE INVENTION

The present invention seeks to provide a clamp assembly for coupling pipes with different diameters, as is described more in detail hereinbelow. The novel clamp assembly provides an increased axial gripping force over a wide range of pipe diameters, thereby solving the problems of the prior art.

There is thus provided in accordance with an embodiment of the present invention a pipe coupling including an annular seal disposed in an annular clamp housing, the annular clamp housing including two openings at opposite ends thereof, wherein at each end of the annular clamp housing, there are two clamp members and tightening elements configured to fasten and tighten the clamp members towards each other in a direction transverse to an axial length of the annular clamp housing so as to apply a radially-inward clamping force on pipes held at each end of the pipe coupling, and deformable members located radially inwards of the annular clamp housing, the deformable members extending axially from a central band member, along the axial length of the annular clamp housing towards distal ends near or at each of the openings, wherein grip elements are located at the distal ends and arranged about an inner perimeter of each of the openings, the grip elements configured to provide axial gripping forces on the pipes held at each end of the pipe coupling.

In accordance with an embodiment of the present invention the deformable member can bend, twist or otherwise deform along any length thereof, from its junction with the central band member up to and including the distal end.

In accordance with an embodiment of the present invention each of the distal ends is formed with a mounting provision for mounting thereon each of the grip elements.

In accordance with an embodiment of the present invention for each of the deformable members, the mounting provision is a static wedge and the grip element is constructed as a movable wedge which has an inclined surface that is arranged to slide relative to the static wedge.

In accordance with an embodiment of the present invention for each of the deformable members, the grip element includes an array of protrusions configured to bite into a pipe surface.

In accordance with an embodiment of the present invention the deformable members form a split cylindrically shaped assembly with a longitudinal gap, and the pipe coupling includes two annular clamp housings, and the annular seal includes a split ring annular seal, and the pipe coupling is adapted for use as an encapsulation pipe repair assembly.

In accordance with an embodiment of the present invention the deformable members are cantilevered from the central band member, wherein the distal ends are not supported and are free to bend, twist or otherwise deform.

In accordance with another embodiment of the present invention the deformable members are supported near the distal ends by an annular support.

In accordance with an embodiment of the present invention the annular seal includes at least one removable seal.

### BRIEF DESCRIPTION OF THE DRAWINGS

The present invention will be understood and appreciated more fully from the following detailed description, taken in conjunction with the drawing in which:
Figs. 1A and 1B are simplified pictorial illustrations of a clamp assembly for coupling pipes with different diameters, constructed and operative in accordance with a non-limiting embodiment of the present invention.
Fig. 2 is a simplified sectional view of the clamp assembly.
Fig. 3 is a simplified end view of the clamp assembly.
Fig. 4 is a simplified cutaway perspective view of the clamp assembly, showing deformable members with grip elements mounted thereon.
Fig. 5 is a simplified pictorial illustration of the array of deformable members with the grip elements, in accordance with a non-limiting embodiment of the present invention.

### DETAILED DESCRIPTION OF EMBODIMENTS

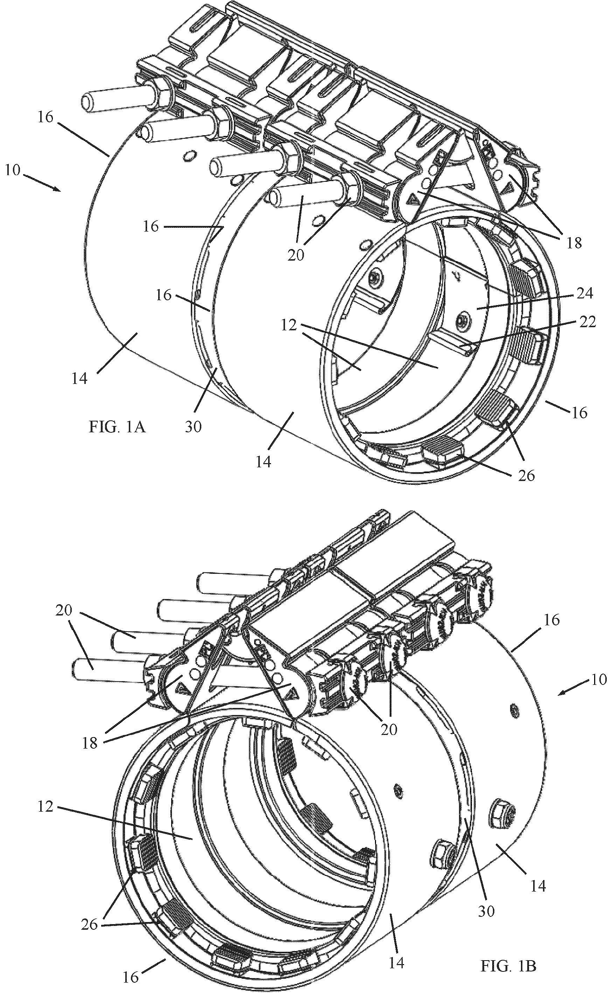

Reference is now made to Figs. 1A and 1B, which illustrate a pipe coupling 10, constructed and operative in accordance with a non-limiting embodiment of the present invention.

Pipe coupling 10 may include an annular seal 12 disposed in an annular clamp housing 14. Annular clamp housing 14 may have two openings 16 at opposite ends thereof. As will be explained below, each opening 16 can receive therein a pipe of different diameters. At each end of annular clamp housing 14, there are two clamp members 18 and tightening elements 20 (e.g., one or more mechanical fasteners, such as a bolt or screw and a tightening nut, and possibly washer) that fasten and tighten clamp members 18 towards each other in a direction transverse to the axial length of annular clamp housing 14 so as to apply a radially-inward clamping force on the pipes held at each end of the pipe coupling 10.

Annular seal 12, which may be made of a natural or artificial elastomeric material, is radially squeezed and sealingly clamped against the outside surface of the pipe when tightening elements 20 fasten and tighten clamp members 18 towards each other. Annular seal 12 may include more than one layer of seals, each seal being nested in an adjacent seal. In this manner, the user can choose whether to remove one of the nested seals to accommodate radially sealing against pipes of different diameters.

The inserted pipe may also press against one or more winged extensions 22 of a seal pressing device 24, which is described in US Patent 9151419. The winged extensions 22 press against the axial edges of annular seal 12, thereby ensuring a fluid-tight seal along the axial length of seal 12.

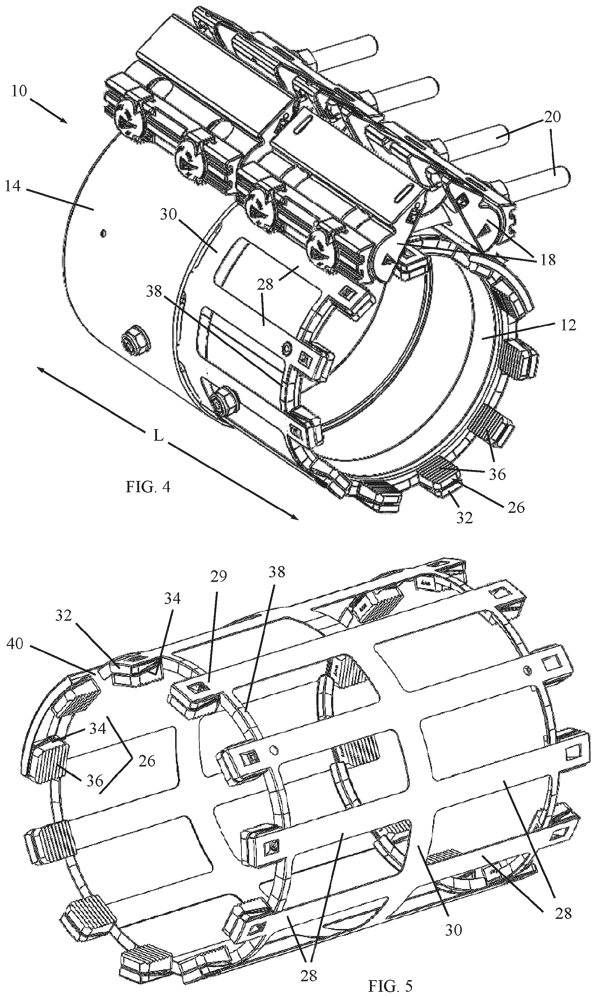

Grip elements 26 are located about the inner perimeter of each opening 16 of housing 14. The grip elements 26 provide axial gripping forces, as is described now with reference to Fig. 5.

Reference is now made to Fig. 5, which illustrates an array of deformable members 28 with the grip elements 26, in accordance with a non-limiting embodiment of the present invention. The deformable members 28 with the grip elements 26 are located radially inwards of annular clamp housing 14, and preferably radially outwards of annular seal 12.

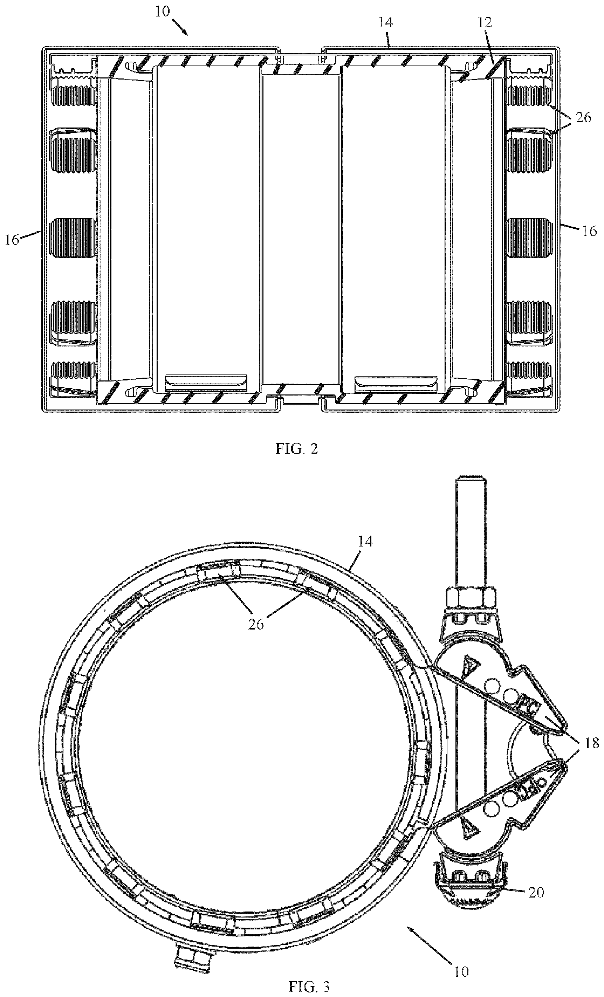

The deformable members 28 may extend axially from a central band member 30, along an axial longitudinal length L of pipe coupling 10 shown in Fig. 4, towards each opening 16 (Figs. 1A, 1B and 3) of the pipe coupling. The deformable members 28 and the central band member 30 may be formed as one unitary piece from sheet metal (e.g., stainless steel) or other suitable materials. Alternatively, deformable members 28 and the central band member 30 may be formed as separate pieces joined together, such as by welding or bonding.

The distal end 29 of each deformable member 28 (the distal end is the end furthest from central band member 30) may be formed with a mounting provision 32 for mounting thereon grip element 26. In a preferred embodiment, the mounting provision 32 is a static wedge and grip element 26 is constructed as a movable wedge which has an inclined surface 34 that is arranged to slide relative to the static wedge mounting provision 32. Grip element 26 may be provided with an array of protrusions or teeth 36, which can bite into the surface of the pipe in different directions. Protrusions 36 are on the side opposite to inclined surface 34.

Grip elements 26 can be made of metal, elastomer, plastic or other materials, depending on the particular application.

Grip element 26 is arranged to slide over static wedge mounting provision 32 in the axial direction (i.e., in either direction along the axial length L in Fig. 4). The axial movement causes protrusions 36 to wedge against and bite into the surface of the pipes being held by pipe coupling 10, thereby providing an axial restraint against axial forces operating on the pipes. Retaining members (not shown) may be provided to limit the axial travel of grip element 26 and prevent grip element 26 from sliding off static wedge mounting provision 32.

Each deformable member 28 can bend, twist or otherwise deform along any length of the member 28, from its junction with central band member 30 all the way to its distal end 29 where grip element 26 is mounted.

In one embodiment, each deformable member 28 is cantilevered from central band member 30, that is, the distal end 29 is not supported and is free to bend, twist or otherwise deform. In another option, illustrated in Fig. 5, one or more deformable members 28 are not cantilevered from central band member 30 but instead are supported near distal end 29 by an annular support 38. Annular support 38 limits the amount deformable member 28 can deform, but still allows radial deformation to accommodate different diameters of pipes.

The invention can be made with just one long annular clamp housing 14. In a preferred embodiment, the invention is useful as an encapsulation pipe repair assembly, as is now explained.

An encapsulation pipe repair assembly is used to repair a leak in a piping system without having to remove or cut pipes. In a preferred embodiment, there are two separate annular clamp housings 14, and annular seal 12 is not a full 360° ring but rather is a split ring. As seen in Fig. 2, the one split annular seal 12 may serve both annular clamp housings 14. Similarly, the array of deformable members 28 with the grip elements 26 is not a full 360° cylindrical shape, but instead is a split cylindrically shaped assembly with a longitudinal split or gap 40, seen at the top of the assembly in Fig. 5.

In order to repair a leak, the array of deformable members 28 with the grip elements 26 is placed (preferably, but not necessarily, symmetrically) over the leak between the two pipes. Due to longitudinal gap 40, there is no need to remove or cuts any pipe. If placed symmetrically, central band member 30 is located at the site of the leak. The split-ring annular seal 12 is placed over the array of deformable members 28 with the grip elements 26. The annular clamp housings are then placed over the split-ring annular seal 12 and the array of deformable members 28 with the grip elements 26. One annular clamp housing 14 is placed on the pipe to the left of the leak and the other annular clamp housing 14 is placed on the pipe to the right of the leak. By tightening the fasteners, each split-ring annular seal 12 is tightened against both pipes to achieve radial sealing, and the grip elements 26 bite into the surface of the pipes to achieve axial fixation, as explained above, to stop the leak.

## Claims

1. A pipe coupling (10) comprising:
an annular seal (12) disposed in an annular clamp housing (14), said annular clamp housing (14) comprising two openings (16) at opposite ends thereof, wherein at each end of said annular clamp housing (14), there are two clamp members (18) and tightening elements (20) configured to fasten and tighten said clamp members (18) towards each other in a direction transverse to an axial length of said annular clamp housing (14) so as to apply a radially-inward clamping force on pipes held at each end of said pipe coupling (10); and
deformable members (28) located radially inwards of said annular clamp housing (14), the pipe coupling (10) being **characterized in that**
said deformable members (28) extend axially from a central band member (30), along the axial length of said annular clamp housing (14) towards distal ends (29) near or at each of said openings (16), wherein grip elements (26) are located at said distal ends (29) and arranged about an inner perimeter of each of said openings (16), said grip elements (26) configured to provide axial gripping forces on the pipes held at each end of said pipe coupling (10).

2. The pipe coupling (10) according to claim 1, wherein said deformable member (28) can bend, twist or otherwise deform along any length thereof, from its junction with said central band member (30) up to and including said distal end (29).

3. The pipe coupling (10) according to claim 1 or claim 2, wherein each of said distal ends (29) is formed with a mounting provision (32) for mounting thereon each of said grip elements (26).

4. The pipe coupling (10) according to claim 3, wherein for each of said deformable members (28), said mounting provision (32) is a static wedge and said grip element (26) is constructed as a movable wedge which has an inclined surface (34) that is arranged to slide relative to the static wedge.

5. The pipe coupling (10) according to any one of claims 1-4, wherein for each of said deformable members (28), said grip element (26) comprises an array of protrusions (36) configured to bite into a pipe surface.

6. The pipe coupling (10) according to any one of claims 1-5, wherein said deformable members (28) form a split cylindrically shaped assembly with a longitudinal gap (40), and the pipe coupling (10) comprises two said annular clamp housings (14), and said annular seal (12) comprises a split ring annular seal, and said pipe coupling (10) is adapted for use as an encapsulation pipe repair assembly.

7. The pipe coupling (10) according to any one of claims 1-6, wherein said deformable members (28) are cantilevered from said central band member (30), wherein said distal ends (29) are not supported and are free to bend, twist or otherwise deform.

8. The pipe coupling (10) according to any one of claims 1-6, wherein said deformable members (28) are supported near said distal ends (29) by an annular support (38).

9. The pipe coupling (10) according to any one of claims 1-8, wherein said annular seal (12) comprises at least one removable seal.

## Patentansprüche

1. Rohrkupplung (10), umfassend:
eine ringförmige Dichtung (12), die in einem ringförmigen Klemmgehäuse (14) angeordnet ist, wobei das ringförmige Klemmgehäuse (14) zwei Öffnungen (16) an seinen gegenüberliegenden Enden umfasst, wobei an jedem Ende des ringförmigen Klemmgehäuses (14) zwei Klemmelemente (18) und Spannelemente (20) vorgesehen sind, die so konfiguriert sind, dass sie die Klemmelemente (18) in einer Richtung quer zur axialen Länge des ringförmigen Klemmgehäuses (14) zueinander befestigen und festziehen, um eine radial nach innen gerichtete Klemmkraft auf an jedem Ende der Rohrkupplung (10) gehaltenen Rohre auszuüben; und
verformbare Elemente (28), die sich radial innerhalb des ringförmigen Klemmgehäuses (14) befinden, wobei die Rohrkupplung (10) **dadurch gekennzeichnet ist, dass**
sich die verformbaren Elemente (28) axial von einem zentralen Bandelement (30) entlang der axialen Länge des ringförmigen Klemmgehäuses (14) in Richtung der distalen Enden (29) nahe oder an jeder der Öffnungen (16) erstrecken, wobei sich Greifelemente (26) an den distalen Enden (29) befinden und um einen Innenumfang jeder der Öffnungen (16) herum angeordnet sind, wobei die Greifelemente (26) so konfiguriert sind, dass sie axiale Greifkräfte auf die an jedem Ende der Rohrkupplung (10) gehaltenen Rohre ausüben.

2. Rohrkupplung (10) gemäß Anspruch 1, wobei das verformbare Element (28) entlang einer beliebigen Länge davon, von seiner Verbindung mit dem zentralen Bandelement (30) bis einschließlich zum distalen Ende (29), gebogen, verdreht oder auf andere Weise verformt werden kann.

3. Rohrkupplung (10) gemäß Anspruch 1 oder Anspruch 2, wobei jedes der distalen Enden (29) mit einer Montagevorrichtung (32) zum Montieren jedes der Greifelemente (26) daran ausgebildet ist.

4. Rohrkupplung (10) gemäß Anspruch 3, wobei für jedes der verformbaren Elemente (28) die Montagevorrichtung (32) ein statischer Keil ist und das Greifelement (26) als beweglicher Keil ausgebildet ist, der eine geneigte Fläche (34) aufweist, die so angeordnet ist, dass sie relativ zum statischen Keil gleitet.

5. Rohrkupplung (10) gemäß irgendeinem der Ansprüche 1 bis 4, wobei für jedes der verformbaren Elemente (28) das Greifelement (26) eine Anordnung von Vorsprüngen (36) umfasst, die so konfiguriert sind, dass sie in eine Rohroberfläche eingreifen.

6. Rohrkupplung (10) gemäß irgendeinem der Ansprüche 1 bis 5, wobei die verformbaren Elemente (28) eine geteilte zylindrische Baugruppe mit einem Längsspalt (40) bilden und die Rohrkupplung (10) zwei ringförmige Klemmgehäuse (14) umfasst, und die ringförmige Dichtung (12) eine geteilte ringförmige Dichtung umfasst, und die Rohrkupplung (10) zur Verwendung als Kapselungsrohr-Reparaturbaugruppe geeignet ist.

7. Rohrkupplung (10) gemäß irgendeinem der Ansprüche 1 bis 6, wobei die verformbaren Elemente (28) aus dem zentralen Bandelement (30) herausragen, wobei die distalen Enden (29) nicht abgestützt sind und sich frei biegen, verdrehen oder auf andere Weise verformen können.

8. Rohrkupplung (10) gemäß irgendeinem der Ansprüche 1 bis 6, wobei die verformbaren Elemente (28) in der Nähe der distalen Enden (29) durch eine ringförmige Stütze (38) abgestützt sind.

9. Rohrkupplung (10) gemäß irgendeinem der Ansprüche 1 bis 8, wobei die ringförmige Dichtung (12) mindestens eine entfernbare Dichtung umfasst.

## Revendications

1. Un raccord de tuyaux (10) comprenant :
un joint annulaire (12) disposé dans un boîtier annulaire de serrage (14), ledit boîtier annulaire de serrage (14) comprenant deux ouvertures (16) à ses extrémités opposées, chaque extrémité dudit boîtier annulaire de serrage (14) comprenant deux éléments de serrage (18) et des éléments de serrage (20) configurés pour fixer et serrer lesdits éléments de serrage (18) l'un vers l'autre dans une direction transversale à la longueur axiale dudit boîtier annulaire de serrage (14) de manière à appliquer une force de serrage radialement vers l'intérieur sur les tuyaux maintenus à chaque extrémité dudit raccord de tuyaux (10) ; et
des éléments déformables (28) situés radialement vers l'intérieur dudit boîtier annulaire de serrage (14), le raccord de tuyaux (10) étant **caractérisé en ce que**
lesdits éléments déformables (28) s'étendent axialement à partir d'un élément (30) formant bande centrale, le long de la longueur axiale dudit boîtier annulaire de serrage (14) vers des extrémités distales (29) proches de chacune desdites ouvertures (16) ou au niveau de celles-ci, des éléments d'adhérence (26) étant situés au niveau desdites extrémités distales (29) et agencés autour d'un périmètre intérieur de chacune desdites ouvertures (16), lesdits éléments d'adhérence (26) étant configurés pour fournir des forces d'adhérence axiales sur les tuyaux maintenus à chaque extrémité dudit raccord de tuyaux (10).

2. Le raccord de tuyaux (10) selon la revendication 1, dans lequel ledit élément déformable (28) est apte à se plier, se tordre ou se déformer d'une autre manière sur toute sa longueur, depuis sa jonction avec ledit élément (30) formant bande centrale jusqu'à ladite extrémité distale (29), incluse.

3. Le raccord de tuyaux (10) selon la revendication 1 ou la revendication 2, dans lequel chacune desdites extrémités distales (29) est formée avec un dispositif de montage (32) pour monter sur elles chacun desdits éléments d'adhérence (26).

4. Le raccord de tuyaux (10) selon la revendication 3, dans lequel, pour chacun desdits éléments déformables (28), ledit dispositif de montage (32) est un coin statique et ledit élément d'adhérence (26) est conçu sous la forme d'un coin mobile qui présente une surface inclinée (34), qui est agencé de façon à coulisser par rapport au coin statique.

5. Le raccord de tuyaux (10) selon l'une quelconque des revendications 1 à 4, dans lequel, pour chacun desdits éléments déformables (28), ledit élément d'adhérence (26) comprend un ensemble de saillies (36) configurées pour mordre dans une surface de tuyau.

6. Le raccord de tuyaux (10) selon l'une quelconque des revendications 1 à 5, dans lequel lesdits éléments déformables (28) forment un ensemble cylindrique fendu avec un espace longitudinal (40), et le raccord de tuyaux (10) comprend deux desdits boîtiers annulaires (14) de serrage, et ledit joint annulaire (12) comprend un joint annulaire à anneau fendu, et ledit raccord de tuyaux (10) est adapté pour être utilisé comme ensemble de réparation de tuyau par encapsulation.

7. Le raccord de tuyaux (10) selon l'une quelconque des revendications 1 à 6, dans lequel lesdits éléments déformables (28) sont en porte-à-faux à partir dudit élément (30) formant bande centrale, lesdites extrémités distales (29) n'étant pas supportées et étant libres de se plier, de se tordre ou de se déformer d'une autre manière.

8. Le raccord de tuyaux (10) selon l'une quelconque des revendications 1 à 6, dans lequel lesdits éléments déformables (28) sont supportés près desdites extrémités distales (29) par un support annulaire (38).

9. Le raccord de tuyaux (10) selon l'une quelconque des revendications 1 à 8, dans lequel ledit joint annulaire (12) comprend au moins un joint amovible.
